# EUROPEAN PATENT SPECIFICATION

(11) **EP 3 087 115 B1**
(45) Date of publication and mention of the grant of the patent: **18.04.2018**
(21) Application number: 14827760.1
(22) Date of filing: 19.12.2014
(51) Int. Cl.: C08G 18/48, C08G 18/76, C08G 18/38, C08G 18/66, C08G 18/32, C08J 9/00, C08G 18/16, C08G 18/18, C08G 18/24, C08G 101/00

(54) **PROCESS FOR MAKING A FLEXIBLE FLAME RETARDANT POLYURETHANE FOAM**
VERFAHREN ZUR HERSTELLUNG EINES FLAMMHEMMENDEN POLYURETHANWEICHSCHAUMS
PROCÉDÉ DE PRÉPARATION D'UNE MOUSSE POLYURÉTHANE SOUPLE

(30) Priority: 23.12.2013 IN 6039CH2013
(43) Date of publication of application: 02.11.2016
(73) Proprietor: Shell Internationale Research Maatschappij B.V., 2596 HR The Hague (NL)
(72) Inventor: ELEVELD, Michiel Barend, 1031 HW Amsterdam (NL); PRADHAN, Pranaya, Man, Singh, Bengaluru 560099 (IN); NACHIAPPAN, Eswaramurthi, Bangalore 56099 (IN)
(74) Representative: Shell Legal Services IP
(86) International application number: PCT/EP2014/078900
(87) International publication number: WO 2015/097109

(56) References cited:
- WO-A1-99/51661
- US-A1- 2008 207 784
- US-A1- 2009 062 416

## Description

### Field of the Invention

This invention relates to flexible polyurethane foams. In particular, though not exclusively, this invention relates to methods of making flame resistant polyurethane foams meeting flame resistance standards, foams obtainable thereby, and to the use of particular polyether polyols to help achieve flame resistance.

### Background to the Invention

Flexible polyurethane foams have found extensive use in a multitude of industrial and consumer applications. This popularity is due to their wide-ranging mechanical properties and ability to be easily manufactured. Main sectors of application are the automotive and aircraft industries, upholstered furniture and technical articles. For instance, full foam seats, top pads for the seats and restraints for back and head, all made from flexible polyurethane foam, are widely used in cars and airplanes. Other applications include the use of flexible polyurethane foam as carpet backings, bedding and mattresses, foamed seat saddles for motorbikes, gaskets between a car body and its lights, lip seals of air filters for engines and insulating layers on car parts and engine parts to reduce sound and vibration.

As is well known to those skilled in the art, polyurethanes are formed from the reaction of isocyanate groups with hydroxyl groups. The most common method of polyurethane production is via the reaction of a polyol and an isocyanate. Cross linking agents, blowing agents, catalysts and other additives may also be included in the polyurethane formulation as needed.

Polyols used in the production of flexible polyurethanes are typically derived from alkylene oxides (such as propylene oxide and ethylene oxide) and various starters such as ethylene glycol, propylene glycol, glycerin, sucrose and sorbitol. Known processes for the production of polyols include ring-opening polymerization of alkylene oxide in the presence of an alkali metal catalyst, and ring-opening polymerization of alkylene oxide in the presence of a composite metal cyanide complex catalyst.

For many applications, flexible polyurethane foams are required to be flame resistant, i.e. meet one or more flame resistance standards. An example of a flame resistance standard is British Standard BS 5852, Part 2, for example the Crib 5 test therein. This test imposes stringent demands on foams in regard to their ignition resistance. A further example of a well-known flame resistance standard is Cal 117 Section A - Part 1.

Various approaches for producing polyurethane foams being both flame resistant and flexible are known in the art. One set of approaches involves the use of specially tailored polyols, but these tend to be expensive. Additionally or alternatively, flexible polyurethane foams exhibiting flame resistance may rely on inclusion of flame retardant additives. For example, flame retardant additives including minerals, such as aluminum trihydrate; salts, such as hydroxymethyl phosphonium salts; phosphorous compounds; phosphated esters; and halocarbons or other halogenated compounds, such as those including bromine and/or chlorine; may be included. However, there is a desire to restrict the use of such flame retardants. Flame retardant additives are expensive, can complicate the production/formation of flexible polyurethane foams, and can negatively impact the physical properties of flexible polyurethane foams formed therewith.

US2009062416 describes a process of producing a polyurethane foam that avoids the use of flame retardant additives, which is achieved through the use of a complex mixture of polyols. Examples 30 to 32 of US2009062416 use a mixture of three different polyols (A1, B1 and B2), and a monool (D1) in order to provide improved flame resistance.

It is an object of the invention to provide flame resistant polyurethane foams at low cost and/or with reduced flame retardant additive levels.

### Statements of the invention

It has now been found that propylene oxide (PO) based polyols that are either free from ethylene oxide (EO) moieties or contain only a low percentage of EO moieties, and which have been produced by ring-opening polymerization of alkylene oxide in the presence of a composite metal cyanide complex catalyst, offer particular benefits in the context of making flame resistant polyurethane foams.

According to a first aspect of the present invention there is provided a process for making a flexible, flame retardant polyurethane foam, the process comprising reacting a PO based polyol with foam-forming reactants to provide said polyurethane foam, wherein said polyol is prepared by ring-opening polymerization of alkylene oxide in the presence of a composite metal cyanide complex catalyst, and wherein said polyol is either free from EO moieties or comprises EO moieties in an amount of at most 1% w/w; wherein said polyol has a polydispersity index (Mw/Mn) in the range of from 1.18 to 1.5.

Further, from a second aspect, the present invention resides in a flexible polyurethane foam obtainable by the process of the first aspect of the invention. Still further, from a third aspect, the present invention resides in a shaped article comprising such flexible polyurethane foam.

From a fourth aspect, the invention resides in the use of a PO based polyol, prepared by ring-opening polymerization of alkylene oxide in the presence of a composite metal cyanide complex catalyst and being either free from EO moieties or comprising EO moieties in an amount of at most 1% w/w, in the preparation of a flexible polyurethane foam for the purpose of enhancing flame resistance of the resulting foam and/or lowering an amount of a flame retardant additive in the foam; wherein said polyol has a polydispersity index (Mw/Mn) in the range of from 1.18 to 1.5. The use may be, for example, in accordance with any method defined or described herein.

Contrary to the teaching of prior art such as WO 9951661 A1, it has been found that PO based polyols that are either free from EO moieties or contain at most 1% EO moieties offer particular advantages. Specifically, such polyols have been found to enhance flame resistance and can therefore reduce the need for flame retardant additives in foams. They are also a cost-effective material for foam production, particularly as they can be produced in a continuous process.

The PO based polyol optionally contains EO moieties in an amount of at most 1% w/w. Where EO moieties are present in the polyol they may preferably be randomly copolymerised with PO moieties. In an embodiment, the polyol optionally contains EO moieties (i.e. if any) in an amount of at most 0.9% w/w, at most 0.8% w/w, at most 0.7% w/w, at most 0.6% w/w, or at most 0.5% w/w. The polyol may advantageously comprise a balance of PO moieties making up the remainder of the polyol. In an embodiment, the polyol comprises only PO moieties (in combination with a starter as will be described).

The amount of EO moieties in % w/w is based on the total of oxyalkylene units present and may be measured according to ASTM D4875.

The polyurethane foam to be prepared in the present process is a flexible polyurethane foam. Polyether polyols suitable for preparing flexible polyurethane foams tend to have a relatively high number average molecular weight and a relatively low nominal functionality.

In an embodiment, the PO based polyol useful in the present invention has a number average molecular weight in the range of from 2500 to 15000 Dalton, preferably 2750 to 4000 Dalton, most preferably 2800 to 3200 Dalton. Advantageously, the polyol may have a nominal functionality (Fₙ) in the range of from 2 to 4, preferably in the range of from 2 to 3.5, most preferably in the range of from 2.5 to 3.

The hydroxyl value of the PO based polyol suitably is of from 15 to 150 mg KOH/g, more suitably of from 20 to 75 mg KOH/g.

The PO based polyol is typically obtained by reacting a starting compound or initiator having a plurality of active hydrogen atoms with PO and optionally EO. As the initiator, a polyhydric alcohol such as ethylene glycol, propylene glycol, diethylene glycol, dipropylene glycol, trimethylol propane or glycerol, or a polyether monool or polyether polyol having of from 2 to 12 hydroxyl groups and a number average molecular weight of from 300 to 5,000 Dalton, which is obtainable by ring-opening polymerization of an alkylene oxide with the above-mentioned polyhydric alcohol in the presence of an alkali catalyst or a cationic catalyst, may be used. The number of hydroxyl groups in the above-mentioned polyhydric alcohol is preferably of from 2 to 8, particularly preferably 2 or 3. Most preferably, propylene glycol (MPG), glycerol or a combination of both is used as initiator.

The initiator may be introduced continuously to a reactor together with the alkylene oxide and/or the catalyst, to carry out the polymerization of the alkylene oxide. As the initiator in such a case, a polyhydric alcohol having a low molecular weight may be used. As such a polyhydric alcohol having a low molecular weight, a polyhydric alcohol having a molecular weight of at most 400, such as ethylene glycol, propylene glycol, diethylene glycol, dipropylene glycol, trimethylol propane or glycerol, may be used. Most preferably, also in such case, propylene glycol (MPG), ethylene glycol (MEG), diethylene glycol (DEG), glycerol or a combination thereof is used as initiator.

Alternatively, batch methods are also known in the art and may in principle be used to prepare the PO based polyol. However, it has surprisingly been found that PO based polyols produced by a continuous process offer improved flame resistance in the polyurethane foam. Accordingly, such PO based polyols, which typically have a higher polydispersity index (weight average molecular weight, Mw / number average molecular weight, Mn) are preferred.

The PO based polyol has a polydispersity index (Mw/Mn) in the range of from 1.18 to 1.5, such as in the range of from 1.2 to 1.4, in particular in the range of from 1.22 to 1.3.

Composite metal cyanide catalyzed polymerization in general tends to produce few low molecular weight compounds (particularly low molecular weight monools) adversely affecting fire resistance, particularly when compared to alkali metal catalyzed continuous processes.

Composite metal cyanide complex catalysts for producing PO based polyol are well known in the art. Composite metal cyanide complex catalysts are frequently also referred to as double metal cyanide (DMC) catalysts. A composite metal cyanide complex catalyst is typically represented by the following formula (1):

(1) M¹ₐ[M²_{b}(CN)_{c}]_{d}.e(M¹_{f}X_{g}).h(H₂0).i(R)

wherein each of M¹ and M² is a metal, X is a halogen atom, R is an organic ligand, and each of a, b, c, d, e, f, g, h and i is a number which is variable depending upon the atomic balances of the metals, the number of organic ligands to be coordinated, etc.

In the above formula (1), M¹ is preferably a metal selected from Zn(II) or Fe(II). In the above formula, M² is preferably a metal selected from Co(III) or Fe(III). However, other metals and oxidation states may also be used, as is known in the art.

In the above formula (1), R is an organic ligand and is preferably at least one compound selected from the group consisting of an alcohol, an ether, a ketone, an ester, an amine and an amide. As such an organic ligand, a water-soluble one may be used. Specifically, one or more compounds selected from tert-butyl alcohol, n-butyl alcohol, iso-butyl alcohol, tert-pentyl alcohol, isopentyl alcohol, N, N-dimethyl acetamide, glyme (ethylene glycol dimethyl ether), diglyrste (diethylene glycol dimethyl ether), triglyme (triethylene glycol dimethyl ether), ethylene glycol mono-tert-butylether, iso-propyl alcohol and dioxane, may be used as organic ligand(s). The dioxane may be 1,4-dioxane or 1,3-dioxane and is preferably 1,4-dioxane. Most preferably, the organic ligand or one of the organic ligands in the composite metal cyanide complex catalyst is tert-butyl alcohol. Further, as an alcohol organic ligand, a polyol, preferably a polyether polyol may be used. More preferably, a poly (propylene glycol) having a number average molecular weight in the range of from 500 to 2,500 Dalton, preferably 800 to 2,200 Dalton, may be used as the organic ligand or one of the organic ligands. Most preferably, such poly (propylene glycol) is used in combination with tert-butyl alcohol as organic ligands. The composite metal cyanide complex catalyst can be produced by known production methods.

The reaction product obtained by such methods may be washed and then subjected to filtration, and the cake (solid component) thereby obtained may be dried to prepare a composite metal cyanide complex catalyst in a powder form. Alternatively, the aqueous solution containing organic ligand and the composite metal cyanide complex catalyst after washing the reaction product, may be dispersed in a polyol, and then, an excess amount of water and the organic ligand may be distilled off to prepare a composite metal cyanide complex catalyst in a slurry form. As such disperging polyol, a polyether polyol may be used. The polyether polyol is preferably a polyether polyol having of from 2 to 12 hydroxyl groups and a number average molecular weight of from 300 to 5,000 Dalton which is obtainable by ring-opening polymerization of an alkylene oxide with a polyhydric alcohol such as ethylene glycol, propylene glycol, diethylene glycol, dipropylene glycol, trimethylol propane or glycerol in the presence of an alkali catalyst or a cationic catalyst. Such a polyether polyol may also be used as an initiator at the time of subsequently producing a polyether polyol using the composite metal cyanide complex catalyst in slurry form.

The number of hydroxyl groups in such disperging polyol is preferably of from 2 to 8, particularly preferably 2 to 3. The alkylene oxide to be used in making said polyol may be propylene oxide, 1,2-butylene oxide, 2,3-butylene oxide, epichlorohydrin, oxetane or tetrahydrofuran. They may be used in combination as a mixture of two or more of them. Propylene oxide is preferred. Most preferably, said disperging polyol is a poly (propylene glycol) having a number average molecular weight of from 500 to 1,500 Dalton.

The said PO based polyol may advantageously be the sole polyol used to make the flame retardant foam. Thus the foam may be made from a reactant mixture consisting of the PO based polyol and the foam-forming reactants. However, in principle the PO based polyol may also be used in combination with one or more other polyols, as is known in the art. To offer significant benefits with regard to flame resistance, the said PO based polyol may preferably make up at least 50% w/w of an overall amount of polyol used to make the flame retardant foam.

As is known in the art, the foam-forming reactants will typically comprise a polyisocyanate in the presence of a blowing agent.

The polyisocyanate may for example be an aromatic polyisocyanate such as tolylene diisocyanate (TDI), diphenylmethane diisocyanate or polymethylene polyphenyl isocyanate, an aliphatic polyisocyanate such as hexamethylene diisocyanate, xylylene diisocyanate, dicyclohexylmethane diisocyanate, lysine diisocyanate or tetramethylxylylene diisocyanate, an alicyclic polyisocyanate such as isophorone diisocyanate, or a modified product thereof. In an embodiment, the polyisocyanate is a mixture of 80 % w/w of 2,4-tolylene diisocyanate and 20 % w/w of 2,6-tolylene diisocyanate, which mixture is sold as "TDI-80".

In the polyurethane preparation process of the present invention, the molar ratio of isocyanate (NCO) groups in the polyisocyanate to hydroxyl (OH) groups in the polyether polyol and any water may be such that the final polyurethane foam contains no free terminal NCO groups.

Said molar ratio of NCO/OH is preferably of from 0.7/1 to 1.5/1. A molar ratio of NCO/OH of 1/1 corresponds with an isocyanate index of 100.

The type of blowing agent used to prepare the polyurethane foam of the present invention, is not critical. For example, suitable blowing agents include water, acetone, gaseous or liquid carbon dioxide, halogenated hydrocarbons, aliphatic alkanes and alicyclic alkanes. Due to the ozone depleting effect of fully chlorinated, fluorinated alkanes (CFC's) the use of this type of blowing agent is generally not preferred, although it is possible to use them within the scope of the present invention. Halogenated alkanes, wherein at least one hydrogen atom has not been substituted by a halogen atom (the so-called HCFC's) have no or hardly any ozone depleting effect and therefore are the preferred halogenated hydrocarbons to be used in physically blown foams. A very suitable HCFC type blowing agent is 1-chloro-1,1-difluoroethane. The use of water as a (chemical) blowing agent is also well known. Water reacts with isocyanate groups according to the well-known NCO/H₂O reaction, thereby releasing carbon dioxide which causes the blowing to occur. Aliphatic and alicyclic alkanes, finally, were developed as alternative blowing agents for the CFC's. Examples of such alkanes are n-pentane and n-hexane (aliphatic) and cyclopentane and cyclohexane (alicyclic). It will be understood that the above blowing agents may be used singly or in mixtures of two or more. The amounts wherein the blowing agents are to be used are those conventionally applied, i.e.: between 0.1 and 10 per hundred parts by weight of polyether polyol (php), preferably 0.1 and 5 php, in case of water; and between 0.1 and 50 php, preferably 0.1 to 20 php in case of halogenated hydrocarbons, aliphatic alkanes and alicyclic alkanes.

Additionally, other components may also be present during the polyurethane preparation process of the present invention, such as one or more polyurethane catalysts, surfactants and/or cross-linking agents. Polyurethane catalysts are known in the art and include many different compounds. For the purpose of the present invention, suitable catalysts include tin-, lead-or titanium-based catalysts, preferably tin-based catalysts, such as tin salts and dialkyl tin salts of carboxylic acids. Specific examples are stannous octoate, stannous oleate, dibutyltin dilaureate, dibutyltin acetate and dibutyltin diacetate. Other suitable catalysts are tertiary amines, such as, for instance, bis (2,2'-dimethylamino) ethyl ether, trimethylamine, triethylamine, triethylenediamine and dimethylethanolamine (DMEA). Examples of commercially available tertiary amine catalysts are those sold under the tradenames NIAX, TEGOAMIN and DABCO (all trademarks). The catalyst is typically used in an amount of from 0.01 to 2.0 parts by weight per hundred parts by weight of polyether polyol (php). Preferred amounts of catalyst are from 0.05 to 1.0 php.

The use of foam stabilisers (surfactants) is well known. Organosilicone surfactants are most conventionally applied as foam stabilisers in polyurethane production. A large variety of such organosilicone surfactants is commercially available. Usually, such foam stabiliser is used in an amount of from 0.01 to 5.0 parts by weight per hundred parts by weight of polyether polyol (php). Preferred amounts of stabiliser are from 0.25 to 1.0 php.

The use of cross-linking agents in the production of polyurethane foams is also well known. Polyfunctional glycol amines are known to be useful for this purpose. The polyfunctional glycol amine which is most frequently used and is also useful in the preparation of the present flexible polyurethane foams, is diethanol amine, often abbreviated as DEOA. If used at all, the cross-linking agent is applied in amounts up to 3.0 parts by weight per hundred parts by weight of polyether polyol (php), but amounts in the range of from 0.1 to 1.5 php are most suitably applied.

In addition, other well-known auxiliaries, such as fillers and flame retardants may also be used during the polyurethane preparation process.

Suitably, flame retardant may be present in a "flame retardant effective amount", i.e. an amount of total flame retardant sufficient to impart flame resistance to the polyurethane foam sufficient to pass a flame resistance standard, e.g. BS 5852, Part 2, Crib 5 or Cal 117 Section A - Part 1.

In an embodiment, the flame resistant foam is flame resistant in the sense that, in the BS 5852, Part 2, Crib 5 test loss in foam weight (due to burning) is not more than 60 g and the time for self-extinguish (when the smoking/smoldering stops) is not more than 10 min. In an embodiment, the loss in foam weight is not more than 40 g.

Advantageously, the process of the invention tends to require a reduced amount of flame retardant due to the nature of the PO based polyol.

The total amount of flame retardant is preferably employed in an amount of between 10 and 40 parts by weight per hundred parts by weight of polyether polyol (php), preferably between 15 and 30 php.

In an embodiment, melamine is used as a principal flame retardant. Suitably, melamine may be employed together with a supplemental halogenated phosphate flame retardant.

More particularly, the melamine useful in the present invention is suitably employed in an amount of between 5 and 50 parts by weight per hundred parts by weight of polyether polyol (php), preferably between 10 and 20 php in the urethane-forming reaction mixture. The supplemental flame retardant is suitably employed in an amount of between 2 and 15 parts by weight per hundred parts by weight of polyether polyol (php), preferably between 3 and 13 php, more preferably between 4 and 10 php.

The melamine can be used in any form, as may be desired, including solid or liquid form, ground (e.g., ball-milled) or unground, as may be desired for any particular application. The supplemental halogenated phosphate flame retardant is commercially available, for example, tris-mono-chloro-propyl-phosphate (TMCP) under the name Antiblaze®.

In one particular embodiment the invention uses a PO based polyol in combination with foam-forming reactants for providing a flame resistant polyurethane foam, said foam forming reactants including melamine in an amount of between 10 and 15 parts by weight per hundred parts by weight of polyether polyol (php), a halogenated phosphate supplemental flame retardant in an amount of between 4 and 10 php, and water in an amount of between 3 and 6 php, wherein said polyol is prepared by ring-opening polymerization of alkylene oxide in the presence of a composite metal cyanide complex catalyst, and wherein said polyol is either free from EO moieties or comprises EO moieties in an amount of at most 1% w/w.

As aforesaid, the PO based polyol has been found to enhance flame resistance of the foam. Accordingly, the use of the PO based polyol may enable a lowering in an amount of a flame retardant additive required in the foam to meet a flame resistance standard.

The flame resistance of the foam may be enhanced, and/or an amount of flame retardant additive required may be reduced, relative to: (i) an identical foam made under identical conditions with an otherwise identical polyol prepared by ring-opening polymerization of alkylene oxide in the presence of an alkali metal catalyst; and/or (ii) an identical foam made under identical conditions with an otherwise identical polyol having an EO content greater than 1% w/w.

Throughout the description and claims of this specification, the words "comprise" and "contain" and variations of the words, for example "comprising" and "comprises", mean "including but not limited to", and do not exclude other moieties, additives, components, integers or steps. Moreover the singular encompasses the plural unless the context otherwise requires: in particular, where the indefinite article is used, the specification is to be understood as contemplating plurality as well as singularity, unless the context requires otherwise.

Preferred features of each aspect of the invention may be as described in connection with any of the other aspects.

Where upper and lower limits are quoted for a property then a range of values defined by a combination of any of the upper limits with any of the lower limits may also be implied.

In this specification, references to properties are - unless stated otherwise - to properties measured under ambient conditions, i.e. at atmospheric pressure and at a temperature of about 20°C.

The present invention will now be further described with reference to the following non-limiting examples.

### Example 1

The flammability of foams produced from a first set of polyols was tested.

Polyol 1 (Comparative) had a number average molecular weight of about 3000 Dalton, a nominal functionality of 3.0 and was entirely PO based. It was produced by ring-opening polymerization of propylene oxide in the presence of an alkali metal catalyst (KOH).

Polyol 2 had a number average molecular weight of about 3000 Dalton, a nominal functionality of about 2.8 and was entirely PO based (0% w/w EO). It was produced by continuous ring-opening polymerization of propylene oxide in the presence of a composite metal cyanide complex catalyst.

Polyol 3 had a number average molecular weight of about 3000 Dalton, a nominal functionality of about 2.8 and included a mixture of PO and EO moieties, with EO moieties making up about 1% w/w. It was produced by continuous ring-opening polymerization of propylene oxide in the presence of a composite metal cyanide complex catalyst.

Polyol 4 (Comparative) had a number average molecular weight of about 3000 Dalton, a nominal functionality of about 2.8 and included a mixture of PO and EO moieties, with EO moieties making up about 3% w/w. It was produced by continuous ring-opening polymerization of propylene oxide in the presence of a composite metal cyanide complex catalyst.

Each of polyols 1 to 4 was in turn processed into a polyurethane foam under identical conditions, using the reaction mixture shown in Table 1:

**Table 1**

| **Component** | **Amount** | |
|---|---|---|
| Polyol (as above) | pbw | 100 |
| Water (blowing agent) | php | 3.5 |
| 33LV (tertiary amine catalyst) | php | 0.18 |
| L620 (surfactant) | php | 0.8 |
| Mealmine (flame retardant) | php | 12 |
| TMCP (flame retardant) | php | 7 |
| DeOA (dienthanolamine crosslinker) | php | 0.2 |
| T-9 (stannous octoate catalyst) | php | 0.26 |
| TDI index (using TDI 80) | | 110 |

Each foam was subjected to the BS5852, Part 2, Crib 5 test and the weight loss results are shown in Table 2 (average of five tests):

**Table 2**

| **Originating polyol** | **Initial foam weight(g)** | **Final foam weight(g)** | **Wt loss(g)** |
|---|---|---|---|
| **Polyol 1** | 794.7 | 749.5 | 45.2 |
| **Polyol 2** | 789.4 | 766.3 | 23.1 |
| **Polyol 3** | 698.6 | 662.0 | 36.6 |
| **Polyol 4** | 734.6 | 651.0 | 83.6 |

It is noted that Polyols 2 and 3 prepared in accordance with the invention showed enhanced fire resistance compared to Polyols 1 and 4.

### Example 2

Polyol 3 from Example 1 was compared with a further polyol, Polyol 5.

Polyol 5 is a BAYER polyol sold under the trade mark ARCOL 1105S. It had a number average molecular weight of about 3000 and included a mixture of PO and EO moieties, with EO moieties making up about 1% w/w. Polyol 5 is believed to have been produced by batch-based ring-opening polymerization of propylene oxide in the presence of a composite metal cyanide complex catalyst.

The polydispersity index (Mw/Mn) of Polyol 3 and Polyol 5, was determined to be about 1.25 and 1.15 respectively.

Each of Polyol 3 and 5 was in turn processed into a polyurethane foam under identical conditions, using the reaction mixture shown in Table 3:

**Table 3**

| **Component** | **Amount** | |
|---|---|---|
| Polyol (as above) | pbw | 100 |
| Water (blowing agent) | php | 3.5 |
| 33LV (tertiary amine catalyst) | php | 0.18 |
| L620 (organosilicone surfactant) | php | 0.8 |
| Mealmine (flame retardant) | php | 20 |
| TMCP (flame retardant) | php | 10 |
| DeOA (dienthanolamine crosslinker) | php | 0.5 |
| T-9 (stannous octoate catalyst) | php | 0.22 |
| Polyol (as above) | pbw | 100 |
| TDI index (using TDI 80) | | 114 |

Each foam was subjected to the BS5852, Part 2, Crib 5 test and the results are shown in Table 4 (average of five tests):

**Table 4**

| **Originating polyol** | **Initial foam weight (g)** | **Final foam weight (g)** | **Wt loss (g)** |
|---|---|---|---|
| **Polyol 3** | 759 | 727 | 32 |
| **Polyol 5** | 757 | 719 | 38 |

It is noted that Polyol 3, prepared with a continuous process and having a higher polydispersity index, showed enhanced fire resistance compared to Polyol 5.

## Claims

1. A process for making a flexible, flame retardant polyurethane foam, the process comprising reacting a PO based polyol with foam-forming reactants to provide said polyurethane foam, wherein said polyol is prepared by ring-opening polymerization of alkylene oxide in the presence of a composite metal cyanide complex catalyst, and wherein said polyol is either free from EO moieties or comprises EO moieties in an amount of at most 1% w/w; wherein said polyol has a polydispersity index (Mw/Mn) in the range of from 1.18 to 1.5.

2. The process of claim 1 wherein said polyol contains EO moieties, if any, in an amount of at most 0.8% w/w.

3. The process of claim 1 or claim 2, wherein the polyol comprises only PO moieties.

4. The process of any preceding claim, wherein said polyol has a number average molecular weight in the range of from 2750 to 4000 Dalton and a nominal functionality (Fn) in the range of from 2 to 3.5.

5. The process of any preceding claim, wherein said polyol is obtained by reacting an initiator having a plurality of active hydrogen atoms with PO and optionally EO, the initiator being introduced continuously to a reactor together with the alkylene oxide and the catalyst, to carry out the polymerization of the alkylene oxide .

6. The process of any preceding claim, wherein the foam includes a flame retardant effective amount of flame retardant such that the foam passes flame resistance standard BS 5852, Part 2, Crib 5.

7. The process of any preceding claim, wherein said foam-forming reactants include melamine in an amount of between 10 and 15 php, a halogenated phosphate supplemental flame retardant in an amount of between 4 and 10 php, and water in an amount of between 3 and 6 php.

8. A flexible polyurethane foam obtainable by the process of any preceding claim.

9. A shaped article comprising a flexible polyurethane foam as claimed in claim 8.

10. Use of a PO based polyol, prepared by ring-opening polymerization of alkylene oxide in the presence of a composite metal cyanide complex catalyst and being either free from EO moieties or comprising EO moieties in an amount of at most 1% w/w, in the preparation of a flexible polyurethane foam for the purpose of enhancing flame resistance of the resulting foam and/or lowering an amount of a flame retardant additive in the foam; wherein said polyol has a polydispersity index (Mw/Mn) in the range of from 1.18 to 1.5.

## Patentansprüche

1. Verfahren zum Herstellen eines flexiblen, flammhemmenden Polyurethanschaums, wobei das Verfahren das Umsetzen eines PO-basierten Polyols mit schaumbildenden Reaktanten umfasst, um den Polyurethanschaum bereitzustellen, wobei das Polyol durch eine Ringöffnungspolymerisation von Alkylenoxid in Gegenwart eines Metallcyanidkomplex-Kompositkatalysators hergestellt wird und wobei dieses Polyol entweder frei von EO-Einheiten ist oder EO-Einheiten in einer Menge von höchstens 1 Gew.-% umfasst, wobei dieses Polyol einen Polydispersitätsindex (Mw/Mn) im Bereich von 1,18-1,5 umfasst.

2. Verfahren nach Anspruch 1, wobei das Polyol EO-Einheiten, sofern vorhanden, in einer Menge von höchstens 0,8 Gew.-% umfasst.

3. Verfahren nach Anspruch 1 oder Anspruch 2, wobei das Polyol nur PO-Einheiten umfasst.

4. Verfahren nach einem der vorhergehenden Ansprüche, wobei das Polyol ein zahlengemitteltes Molekulargewicht im Bereich von 2750 bis 4000 Dalton und eine nominelle Funktionalität (Fn) im Bereich von 2 bis 3,5 aufweist.

5. Verfahren nach einem der vorhergehenden Ansprüche, wobei das Polyol durch Umsetzen eines zahlreiche aktive Wasserstoffatome enthaltenden Starters mit PO und gegebenenfalls EO erhalten wird, wobei der Starter kontinuierlich zusammen mit dem Alkylenoxid und dem Katalysator in einen Reaktor eingeführt wird, um die Polymerisation des Alkylenoxids durchzuführen.

6. Verfahren nach einem der vorhergehenden Ansprüche, wobei der Schaum eine zur Flammhemmung wirksame Menge an Flammhemmer einschließt, sodass der Schaum den Flammfestigkeitsstandard BS 5852, Teil 2, Crib 5 besteht.

7. Verfahren nach einem der vorhergehenden Ansprüche, wobei die schaumbildenden Reaktanten Melamin in einer Menge zwischen 10 und 15 php, einen ergänzenden, halogenierten Phosphat-Flammhemmer in einer Menge zwischen 4 und 10 php und Wasser in einer Menge zwischen 3 und 6 php enthalten.

8. Flexibler Polyurethanschaum, erhältlich durch das Verfahren nach einem der vorhergehenden Ansprüche.

9. Geformter Gegenstand, umfassend einen flexiblen Polyurethanschaum nach Anspruch 8.

10. Verwendung eines PO-basierten Polyols, das durch Ringöffnungspolymerisation von Alkylenoxid in Gegenwart eines Metallcyanidkomplex-Kompositkatalysators hergestellt wird und das entweder frei von EO-Einheiten ist oder EO-Einheiten in einer Menge von höchstens 1 Gew.-% umfasst, bei der Herstellung eines flexiblen Polyurethanschaums zum Zwecke der Verbesserung der Flammfestigkeit des resultierenden Schaums und/oder Verringern der Menge an Flammhemmeradditiv in dem Schaum, wobei das Polyol einen Polydispersitätsindex (Mw/Mn) im Bereich von 1,18 bis 1,5 aufweist.

## Revendications

1. Procédé de fabrication d'une mousse polyuréthane ignifuge flexible, le procédé comprenant la réaction d'un polyol à base d'oxyde de propylène avec des réactifs moussants pour réaliser ladite mousse polyuréthane, ledit polyol étant préparé par polymérisation par ouverture de cycle d'un oxyde d'alkylène en présence d'un catalyseur de complexe de cyanure de métal composite, et ledit polyol étant soit dépourvu de fractions d'oxyde d'éthylène ou comprenant des fractions d'oxyde d'éthylène dans une quantité de 1 % en poids maximum ; ledit polyol ayant un indice de polydispersité (Mw/Mn) allant de 1,18 à 1,5.

2. Procédé selon la revendication 1, dans lequel ledit polyol contient des fractions d'oxyde d'éthylène, le cas échéant, dans une quantité de 0,8 % en poids maximum.

3. Procédé selon la revendication 1 ou la revendication 2, dans lequel le polyol comprend uniquement des fractions d'oxyde de propylène.

4. Procédé selon une quelconque revendication précédente, dans lequel ledit polyol a une masse moléculaire moyenne en nombre allant de 2750 à 4000 Dalton et une fonctionnalité nominale (Fₙ) allant de 2 à 3,5.

5. Procédé selon une quelconque revendication précédente, dans lequel ledit polyol est obtenu par réaction d'un initiateur ayant une pluralité d'atomes d'hydrogène actifs avec l'oxyde de propylène et, en option, l'oxyde d'éthylène, l'initiateur étant introduit en continu dans un réacteur conjointement à l'oxyde d'alkylène et le catalyseur, afin d'exécuter la polymérisation de l'oxyde d'alkylène.

6. Procédé selon une quelconque revendication précédente, dans lequel la mousse comprend une quantité efficace d'agent ignifuge de telle sorte que la mousse soit conforme à la norme de résistance au feu BS 5852, partie 2, Crib 5.

7. Procédé selon une quelconque revendication précédente, dans lequel lesdits réactifs moussants comprennent de la mélamine dans une quantité comprise entre 10 et 15 php, un agent ignifuge supplémentaire à base de phosphate halogéné dans une quantité comprise entre 4 et 10 php, et de l'eau dans une quantité comprise entre 3 et 6 php.

8. Mousse polyuréthane flexible, pouvant être obtenue par le procédé selon une quelconque revendication précédente.

9. Article façonné comprenant une mousse polyuréthane flexible selon la revendication 8.

10. Utilisation d'un polyol à base d'oxyde de propylène, préparé par polymérisation par ouverture de cycle d'un oxyde d'alkylène en présence d'un catalyseur de complexe de cyanure de métal composite et étant soit exempt de fractions d'oxyde d'éthylène, soit comprenant des fractions d'oxyde d'éthylène dans une quantité de 1 % en poids maximum, lors de la préparation d'une mousse polyuréthane flexible afin d'améliorer la résistance au feu de la mousse en résultant et/ou de diminuer la quantité d'adjuvant ignifuge dans la mousse ; ledit polyol ayant un indice de polydispersité (Mw/Mn) allant de 1,18 à 1,5.
